Europäisches Patentamt

European Patent Office

Office européen des brevets

(19)

(11) EP 0 685 666 B1

(12) EUROPEAN PATENT SPECIFICATION

(45) Date of publication and mention
of the grant of the patent:
**27.10.1999 Bulletin 1999/43**

(51) Int Cl.$^6$: **F16H 61/06**

(21) Application number: 95108449.0

(22) Date of filing: 01.06.1995

(54) **Control system for automatic transmission**

Steuerungssystem für Automatikgetriebe

Système de commande pour transmission automatique

(84) Designated Contracting States:
DE FR GB

(30) Priority: 02.06.1994 JP 14220394
02.12.1994 JP 32949494

(43) Date of publication of application:
06.12.1995 Bulletin 1995/49

(73) Proprietors:
• AISIN AW CO., LTD.
Anjo-shi Aichi-ken 444-11 (JP)
• TOYOTA JIDOSHA KABUSHIKI KAISHA
Aichi-ken 471-8571 (JP)

(72) Inventors:
• Tsukamoto, Kazumasa
Anjo-shi, Aichi-ken, 444-11 (JP)
• Ando, Masahiko
Anjo-shi, Aichi-ken, 444-11 (JP)
• Hayabuchi, Masahiro
Anjo-shi, Aichi-ken, 444-11 (JP)
• Fukatsu, Akira
Anjo-shi, Aichi-ken, 444-11 (JP)
• Mae, Toshiyuki
Anjo-shi, Aichi-ken, 444-11 (JP)

• Kaigawa, Masato
Toyota-shi, Aichi-ken, 471 (JP)
• Fukumura, Kagenori
Toyota-shi, Aichi-ken, 471 (JP)
• Oba, Hidehiro
Toyota-shi, Aichi-ken, 471 (JP)
• Hojo, Yasuo
Toyota-shi, Aichi-ken, 471 (JP)
• Kimura, Hiromichi
Toyota-shi, Aichi-ken, 471 (JP)
• Tabata, Atsushi
Toyota-shi, Aichi-ken, 471 (JP)
• Hamajima, Tetsuo
Toyota-shi, Aichi-ken, 471 (JP)
• Takahashi, Nobuaki
Toyota-shi, Aichi-ken, 471 (JP)

(74) Representative: VOSSIUS & PARTNER
Siebertstrasse 4
81675 München (DE)

(56) References cited:
EP-A- 0 545 385         US-A- 5 195 036
US-A- 5 239 896         US-A- 5 342 253

## Description

The present invention relates to a control system for an automatic transmission and, more particularly, to a control system for switching the grips of frictional engagement elements in a transmission mechanism so as to shift the automatic transmission.

In the prior art, the automatic transmission is required. depending upon the gear train construction, to effect the so-called "grip-changing operation" in which the application of one of two frictional engagement elements (e.g., brakes or clutches) and the release of the other are simultaneously performed at a time of shifting between specific two gear stages. In this case. one-way clutches are usually arranged in parallel with the individual frictional engagement elements to optimize the applying/releasing timings thereby to avoid the drop of the output shaft torque due to the tie-up and the engine racing due to the under-lap. In order to make the transmission mechanism compact, however, there may be adopted a construction which has the one-way-clutch omitted. In this case, oil pressure feeding/releasing oil passages for the two frictional engagement elements have to be arranged with dedicated valves for controlling the release of the oil pressure from one frictional engagement element and the oil pressure feed to the other in a related manner. The control system thus constructed is exemplified in the prior art by the technique, as disclosed in JP-A-5 157168. In this disclosure, the valve (i.e., 2-3 timing valve) for controlling the oil pressure of the frictional engagement element (which may be a brake B-3 in the embodiments of the present invention, as will be likewise exemplified by a parenthesized component of the embodiments) at the side to be released at a time of shifting from a 2nd speed to a 3rd speed (as will be likewise abbreviated by 2nd → 3rd as in other shifts) is arranged separately of a valve (i.e., B-3 control valve) for controlling the oil pressure of the frictional engagement element at another shifting time.

However, the adoption of this construction is not always suitable for making the control system compact so as to meet the demands for the multistage, light weight and on-board improvement of the automatic transmission. It would therefore be convenient for the compactness, if the aforementioned two valves could be integrated to perform the two functions. Then, the following problems would arise. Specifically, at the grip-change shifting (e.g., 2nd → 3rd) time, said valve has its spool actuated to control the first frictional engagement element (i.e., brake B-3) pressure by applying the oil pressure of the applied side frictional engagement element (i.e., the brake B-2) and the released side frictional engagement element (i.e., the brake B-3) in a first direction and by applying the external control signal pressure (i.e., SLU linear solenoid valve pressure) in an opposite second direction. At another shifting time, on the other hand, the first frictional engagement element (i.e., the brake B-3) is controlled by the relation between the external control signal pressure and only the oil pressure of that element so that the external control signal pressure for ensuring the complete engagement of the element has to be higher at the grip-change shifting (i. e., 2nd → 3rd) time by the oil pressure of the second frictional engagement element (i.e., the brake B-2) than at the remaining shifting times. However, the oil pressure range, in which the valve (i.e., the linear solenoid valve SLU) can accurately output the external control signal pressure, is limited of itself. If, therefore, the output range is widened to cover the grip-change shift, a reduction is invited in the accuracy of the oil pressure output at the remaining shifting times. If, however, the control for the grip-change shifting time is to be made within such an output range as can retain the accuracy, the engagement of the first frictional engagement element cannot be retained.

The features of the preamble of claims 13 are shown in JP-A-5-215219 9 (US-A-5342253) which discloses a hydraulic control system for controlling an automatic transmission including a regulating value which reduces a line pressure in accordance with a control pressure, provided in accordance with vehicle driving conditions, to provide a coupling pressure for coupling a specific one of frictional coupling elements of the automatic transmission. The regulating valve is enabled to provide the coupling pressure independently from the control pressure when a coupling pressure for another frictional coupling element is higher than a specific level.

In order to solve the above-specified problems, therefore, it is an object of the present invention to provide a control system for an automatic transmission, which can be made compact by satisfying the oil pressure control conditions of the first frictional engagement element highly accurately by the unified valve.

In order to solve the above-specified object, according to a first aspect of the present invention, there is provided a control system for an automatic transmission comprising: a first frictional engagement element and a second frictional engagement element; a first hydraulic servo for controlling the application/ release of said first frictional engagement element and a second hydraulic servo for controlling the application/release of said second frictional engagement element; an oil passage connected to said first hydraulic servo for feeding/releasing an oil pressure to/from said first hydraulic servo; a regulator valve disposed in said oil passage for regulating the oil pressure in said oil passage; and signal pressure generating means for applying a signal pressure to said regulator valve, whereby a predetermined gear stage is established by changing the grips of said first frictional engagement element and said second frictional engagement element by feeding/releasing the oil pressure to/from said first hydraulic servo and said second hydraulic servo, wherein said regulator valve has a valve member, and wherein said valve member includes: a first pressure receiving area to which is applied a feed pressure to said first hydraulic servo as a feedback pressure in a first direction; a second pressure receiving area to which is applied said signal pressure in a second direction opposite to said first direction; a fourth pressure receiving area to which is applied a feed pressure to said second hydraulic servo in said first direction at a grip-change shifting time when said first frictional engagement element is released whereas said second frictional engagement element is applied; and a third pressure receiving area to which is applied said signal pressure in said second direction, for participating in the regulation of the oil pressure in said first oil passage only at said shifting time.

According to a second aspect of the present invention, there is provided a control system for an automatic transmission comprising: a first frictional engagement element and a second frictional engagement element; a first hydraulic servo for controlling the application/release of said first frictional engagement element and a second hydraulic servo for controlling the application/release of said second frictional engagement element; an oil passage connected to said first hydraulic servo for feeding/releasing an oil pressure to/from said first hydraulic servo; a regulator valve disposed in said oil passage for regulating the oil pressure in said oil passage; and signal pressure generating means for applying a signal pressure to said regulator valve, whereby a predetermined gear stage is established by changing the grips of said first frictional engagement element and said second frictional engagement element by feeding/releasing the oil pressure to/from said first hydraulic servo and said second hydraulic servo, wherein said regulator valve includes a valve member, and wherein said valve member includes: a first pressure receiving area to which is applied a feed pressure to said first hydraulic servo as a feedback pressure in a first direction; a second pressure receiving area to which is applied said signal pressure in a second direction opposite to said first direction; a fourth pressure receiving area to which is applied a feed pressure to said second hydraulic servo in said first direction at a grip-change shifting time when said first frictional engagement element is released whereas said second frictional engagement element is applied; and a third pressure receiving area to which is applied said signal pressure in said second direction, for withdrawing its participation in the regulation of the oil pressure in said first oil passage at said shifting time.

In the present invention having the construction thus made, first of all, according to the construction of the first feature, at the grip-change shifting time, that is, when the oil pressure is fed to the second hydraulic servo for controlling the application/release of the second frictional engagement element, not only the signal pressure applied to the second pressure receiving area but also the signal pressure applied to the third pressure receiving area participates in the action to regulate the oil pressure in the first oil passage As a result, the regulator valve is enabled to regulate the oil pressure to the first hydraulic servo by the relations among the signal pressures applied to its two portions, the feed pressure to the second hydraulic servo and the feedback pressure from the first hydraulic servo. At another shifting time, on the contrary, the signal pressure to be applied to the third pressure receiving area does not participate in the operation to regulate the oil pressure in the first oil passage so that the regulator valve is enabled to regulate the oil pressure to the first hydraulic servo by the relation between the signal pressure applied to its second pressure receiving area and the feedback pressure from the first hydraulic servo.

According to the construction of the second feature, moreover, at the grip-change shifting time, that is, when the oil pressure is fed to the second hydraulic servo for controlling the application/release of the second frictional engagement element, the signal pressure applied to the third pressure receiving area does not participate in the action to regulate the oil pressure in the first oil passage. As a result, the regulator valve is enabled to control the oil pressure to the first hydraulic servo by the relations among the signal pressure applied to the second pressure receiving area, the feed pressure to the second hydraulic servo and the feedback pressure from the first hydraulic servo. At another shifting time, on the contrary, the signal pressure applied to the third pressure receiving area participates in the action to regulate the oil pressure in the first oil passage so that the regulator valve is enabled to control the oil pressure to the first hydraulic servo by the relation between the signal pressure applied to the differential face between the second pressure receiving area and the third pressure receiving area and the feedback pressure from the first hydraulic servo.

Thus, according to present invention of the aforementioned first and second features, the force to stand against the oil pressure component, which is to be applied to the control valve from the frictional engagement element to be applied at the grip-change shifting time, can be retained not by the external control signal pressure itself but by increasing the receiving area of the signal pressure. As a result, that extension of the output width of the external control signal pressure, which might otherwise be caused by unifying the valve, can be eliminated to make the control system compact while preventing deterioration of the accuracy.

Fig. 1 is a circuit diagram of a portion of a hydraulic control system for an automatic transmission according to a first embodiment of the present invention;
Fig. 2 is a skeleton diagram showing a transmission mechanism portion of the automatic transmission;
Fig. 3 is an operation chart of the automatic transmission;
Fig. 4 is a block diagram showing a system construction of the automatic transmission;
Fig. 5 is a control flow chart of the control system of the automatic transmission at individual shifting times;

Fig. 6 is a circuit diagram of a portion showing the connected situations of oil passages of the hydraulic control system at a 1st → 2nd shifting time;

Fig. 7 is a time chart of the automatic transmission at the 1st → 2nd shifting time;

Fig. 8 is a time chart of the automatic transmission at a 2nd → 1st shifting time;

Fig. 9 is a time chart of the automatic transmission at a 2nd → 3rd shifting time;

Fig. 10 is a time chart of the automatic transmission at a 3rd → 2nd shifting time;

Fig. 11 is an enlarged section showing a modification of a control valve of the hydraulic control system;

Fig. 12 is a circuit diagram showing a portion of a second embodiment of the hydraulic control system having the control valve built therein;

Fig. 13 is a circuit diagram showing a portion of a third embodiment in which is changed a passage for applying an external signal pressure to the control valve;

Fig. 14 is a circuit diagram showing a portion of a fourth embodiment in which is changed a connection mode of a relay valve;

Fig. 15 is a circuit diagram showing a portion of a hydraulic control system of an automatic transmission according to a fifth embodiment of the present invention;

Fig. 16 is an enlarged section showing the detail of a regulator valve of the hydraulic control system according to the fifth embodiment;

Fig. 17 is a time chart showing the automatic transmission according to the fifth embodiment at a 1st → 2nd shifting time;

Fig. 18 is a time chart of the automatic transmission according to the fifth embodiment at a 2nd → 1st shifting time; and

Fig. 19 is a time chart of the automatic transmission according to the fifth embodiment at a 2nd → 3rd shifting time.

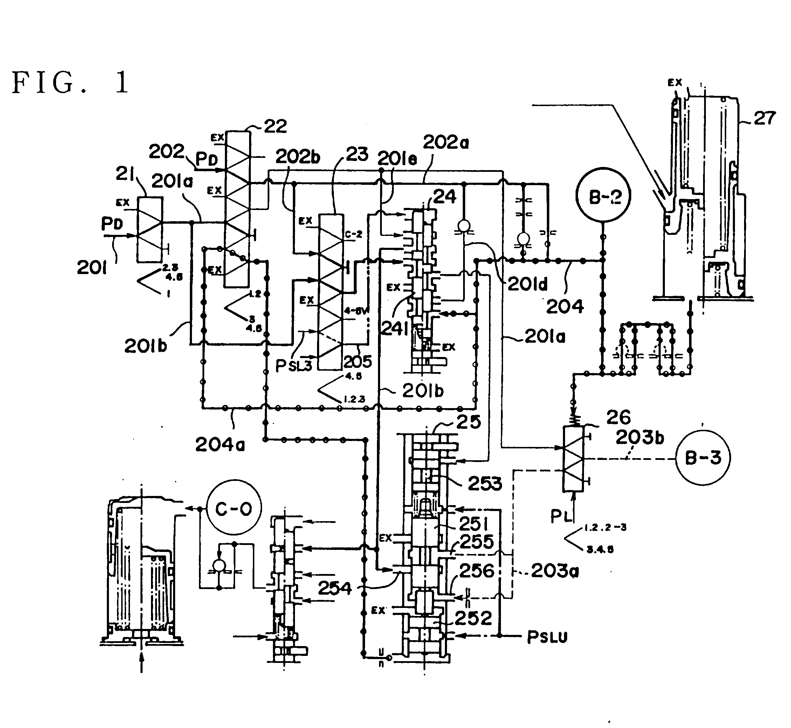

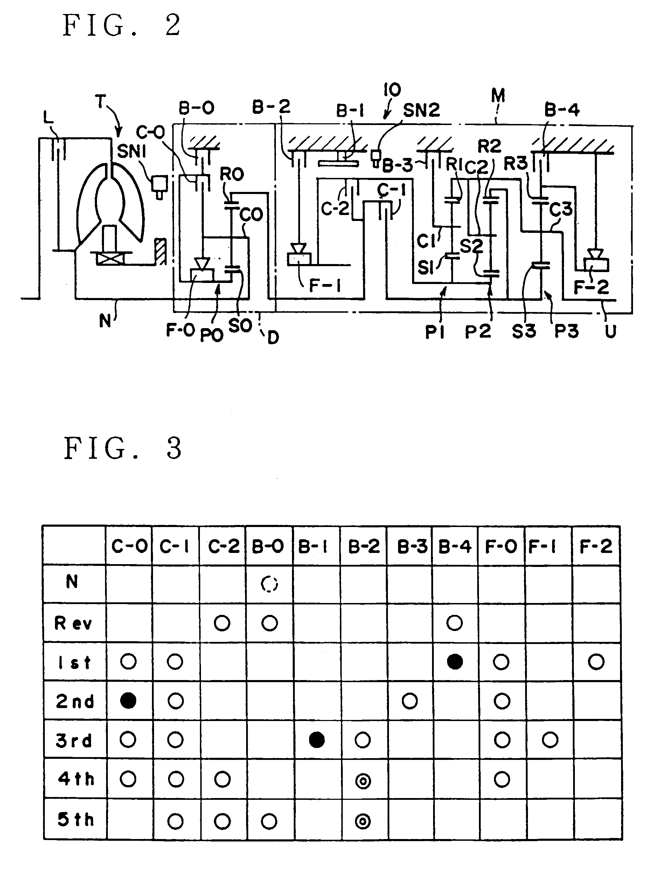

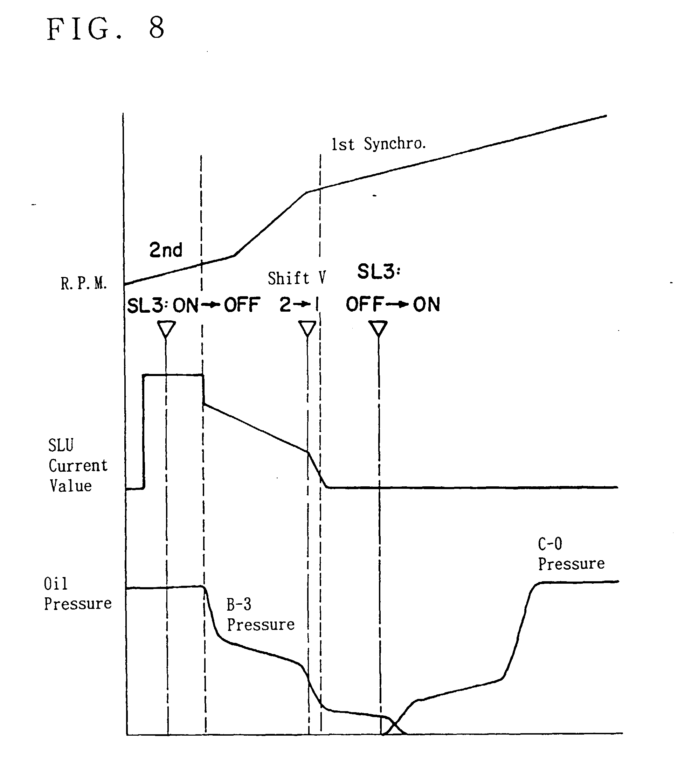

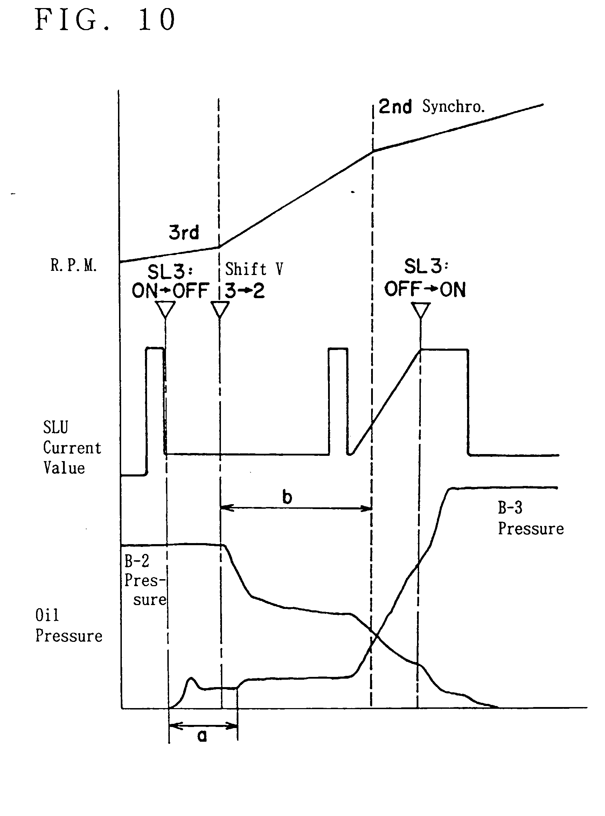

The present invention will be described in the following in connection with its embodiments with reference to the accompanying drawings. Figs. 1 to 10 show a first embodiment of the present invention. Here will be described at first the schematic construction of the entirety of an automatic transmission. As shown in Fig. 2, an automatic transmission 10 has its mechanical portion constructed, in this embodiment, to have five speeds by combining an auxiliary transmission mechanism D composed of a pre-overdrive planetary gear unit and a main transmission mechanism M composed of a simply connected 3-planetary gear train to establish four forward speeds and one reverse. The mechanical portion thus constructed is connected to a torque converter T having a lockup clutch L.

The auxiliary transmission mechanism D is equipped with: a one-way clutch F-O in association with a sun gear S0, a carrier C0 and a ring gear R0; a multi-disc clutch C-0 in parallel with the one-way clutch F-0; and a multi-disc brake B-0 in series with the multi-disc clutch C-0. On the other hand, the main transmission mechanism M is equipped with three sets of simply connected gear units P1 to P3 in which are suitably directly connected the individual transmission elements composed of sun gears S1 to S3, carriers C1 to C3 and ring gears R1 to R3. The main transmission mechanism M is arranged with multi-disc clutches C-1 and C-2, a band brake B-1, multi-disc brakes B-2 to B-4, and one-way clutches F-1 and F-2 in association with the transmission elements of the individual gear units. Incidentally, in Fig. 2, reference characters SN1 designate a C0 sensor for detecting the drum rotation of the clutch C-0, and characters SN2 designate a C2 sensor for detecting the drum rotation of the clutch C-2. Moreover, the individual clutches and brakes are equipped with hydraulic servo units composed of piston-cylinder mechanisms for applying/ releasing their friction members, although not shown.

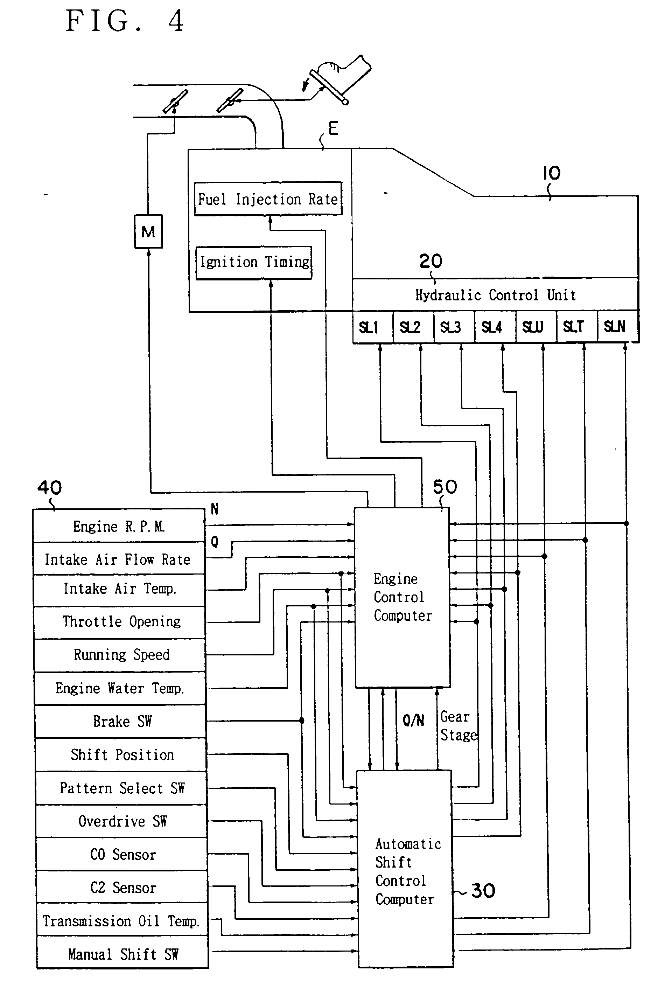

As shown in Fig. 4, the automatic transmission 10 is equipped with: a hydraulic control system 20 for controlling the mechanical portion having the aforementioned construction, a torque converter and the lockup clutch; and the not-shown oil pump which is built in the mechanical portion as the oil pressure source for the hydraulic control system 20. The automatic transmission 10 is connected, when mounted on the vehicle, to an engine E and has its hydraulic control system 20 connected with an automatic transmission control computer 30 through individual solenoid valves SL1 to SL4 and individual linear solenoid valves SLN, SLT and STU, which are built in the hydraulic control system 20. The automatic transmission control computer 30 is connected with: a variety of sensors 40, which are arranged in the individual portions of the vehicle including the engine E and the automatic transmission 10; and an engine control computer 50.

In this automatic transmission 10, the rotation of the engine E shown in Fig. 4 is transmitted to the input shaft N of the auxiliary transmission mechanism D through the torque converter T shown in Fig. 2. Moreover, the rotation of the input shaft N is inputted to the sun gear S3 of the gear unit P3 under the control of the hydraulic control system with the clutch C-0 being applied to directly connect the auxiliary transmission mechanism D, with the clutch C-1 of the main transmission mechanism M being applied, with all the remaining frictional engagement elements being released, and is outputted as a 1st-speed rotation to an output shaft U from the carrier C3 by obstructing the backward rotation of the ring gear R3 by the one-way clutch F-2.

Next, a 2nd-speed rotation is established when the auxiliary transmission mechanism D is directly connected so that the clutch C-1 and the brake B-3 are applied. At this time, the input having entered the ring gear R2 of the gear unit P2 is outputted, by using the carrier C1 of the gear unit P1 as a reaction element, to the carrier C2 of the gear unit P2 and the ring gear R1 of the gear unit P1, as directly connected to the former, so that it establishes the 2nd-speed rotation of the output shaft U.

On the other hand, a 3rd-speed rotation is established, too, when the auxiliary transmission mechanism D is directly connected to apply the clutch C-1 and the brake B-2 while releasing the others. At this time, the input having entered the ring gear R2 of the gear unit P2 is outputted to the carrier C2 by using the sun gear S2 as a reaction element so that it establishes the 3rd-speed rotation of the output shaft U.

Moreover, a 4th-speed rotation is established, too, when the auxiliary transmission mechanism D is directly connected to apply both the clutch C-1 and the clutch C-2. At this time, the input rotation is inputted to the ring gear R2 and the sun gear S2 so that the gear unit P2 is directly connected to output the input rotation as it is. Still moreover, a 5th-speed rotation is established, when the main transmission mechanism M is in the state of the aforementioned 4th-speed rotation, by releasing the clutch C-0 and applying the brake B-0 to fix the sun gear S0 thereby to accelerate the auxiliary transmission mechanism D. On the other hand, the reverse is established, when the auxiliary transmission mechanism D is in the a-forementioned state, by applying the clutch C-2 and the brake B-4 of the main transmission mechanism M. At this time, the input having entered the sun gear S2 of the gear unit P2 is outputted as the backward rotations of the carriers C2 and C3 of the gear units P2 and P3 using the ring gear R3 as a reaction element.

The applied/released relations of the individual frictional engagement elements and the one-way clutches at the aforementioned individual gear stages are tabulated in the operation chart of Fig. 3. In Fig. 3: blank circles ○ designate the application for the clutches and brakes and the lock for the one-way clutches; solid circles ● designate the application only at the engine braking time; a broken circle ○ designates the application or release; and double circles ◎ designate the application withdrawing the participation in the power transmission.

In the automatic transmission 10 thus constructed, according to the present invention, a first frictional engagement element is exemplified by the brake B-3, and the second frictional engagement element is exemplified by the brake B-2. As shown in Fig. 1, the circuit portion, which is directly related to the regulation and the feed/release of the oil pressure of the hydraulic servo units for applying/releasing the individual friction members of the brake B-3 and the brake B-2, is arranged with a 1-2 shift valve 21, a 2-3 shift valve 22, a 3-4 shift valve 23, a B-2 release valve 24, a B-3 control valve 25, a relay valve 26 and a B-2 accumulator 27. These hydraulic components are controlled by the solenoid valves SL1 to SL4 for switching the individual shift valves, a lockup linear solenoid valve SLU, the accumulator control linear solenoid valve SLN for controlling the B-2 accumulator 27 and its back pressure, the linear solenoid valve SLT for outputting a control signal according to the engine load to the linear solenoid valve SLU, and so on.

Of these components, the control valve 25, as arranged in the feeding/releasing oil passage of the oil pressure for the brake B-3, is constructed of: a spool 251 adapted to be fed with the fed-back oil pressure of the brake B-3 in one direction (i.e., upward of the drawing) and with an external control signal oil pressure (i. e., the signal pressure outputted from the linear solenoid valve SLU) $P_{SLU}$, to regulate the oil pressure of the brake B-3 in accordance with those fed pressures; and a plunger 252 arranged coaxially with the spool 251 and adapted to be fed with the oil pressure of the brake B-2 upwardly of the drawing, at the grip-change shifting time of applying the brake B-2 and releasing the brake B-3, and with the linear solenoid valve SLU signal pressure downwardly of the drawing at at least the aforementioned shift time. When the oil pressure of the brake B-2 is applied, the plunger 252 is brought into abutment against the spool 251 so that it interlocks the spool 251.

Moreover, the feed of the oil pressure to the control valve 25 for regulating the brake B-3 oil pressure is effected through the 1-2 shift valve 21 acting as the shift valve which is not switched at the grip-change shifting time. Between the control valve 25 and the brake B-3, moreover, there is arranged the relay valve 26 to be controlled by the oil pressure coming from the brake B-2.

The connections between the aforementioned individual valves and oil passages will be described in detail in the following. A D-range oil passage 201 leading to the not-shown manual valve is branched through the 1-2 shift valve 21, and one branch oil passage 201a is connected through the 2-3 shift valve 22 to the relay valve 26 and further to a brake B-3 oil passage 203b. The other branch oil passage 201b leads through the 3-4 shift valve 23 and the B-2 release valve 24 to the in-port 254 of the B-3 control valve 25, from which the oil passage 201b is connected through an oil passage 203a to the relay valve 26.

The other D-range pressure oil passage 202 leading to the manual valve is branched through the 2-3 shift valve 22, and one branch oil passage 202a is connected through an orifice to a brake B-2 oil passage 204. This oil passage 204 is connected through the B-2 release valve 24 and a check valve to the oil passage 202a and through an orifice to the accumulator 27. The other branch oil passage 202b is connected through the 3-4 shift valve 23 to the clutch C-2.

The 3-4 shift valve 23 is so connected through a solenoid valve signal pressure oil passage 205 (as indicated by double-dotted lines in Fig. 1) to the B-2 release valve 24 as not only to provide and interrupt the communication between the two oil passages 201b and 202b but also to apply a solenoid valve SL3 signal pressure ($P_{SL3}$) to the spool end of the B-2 release valve 24.

The B-2 release valve 24 is formed with a bypass circuit for accelerating the drainage of the oil passage of the accumulator 27 at the release end of the brake B-2 and is equipped with a spring-loaded spool 241. The B-2 release valve 24 is fed at the end of the spool 241 with the signal pressure ($P_{SL3}$) of the solenoid valve SL3 by way of the 3-4 shift valve 23 so as to provide and interrupt the communication of a bypass oil passage 201d with the brake B-2 oil passage 204, to switch the communication of the D-range pressure oil passage 201b between the in-port 254 of the B-3 control valve 25 and a signal port at the end of a plunger 253, and to provide and interrupt the communication of an oil passage 201e branched from the other D-range pressure oil passage 201a with the oil passage 201b. As a result, the in-port 254 of the B-3 control valve 25 can be fed with a D-range pressure ($P_D$) from the two oil passages 201b and 201e through the 1-2 shift valve 21 in parallel with the 2-3 shift valve 22 and the 3-4 shift valve 23.

The B-3 control valve 25 is constructed such that the oil pressure of the oil passage 203a leading to an out-port 255 is regulated by controlling the in-port 254 with one and a drain port EX with the other of the two lands, which are formed on the spool 251, by a feedback pressure fed to the end of the spool 251 through a feedback signal pressure in-port 256. The construction is further made such that the plunger 252 arranged coaxially with the spool 251 is formed into a differential piston shape having such a stroke area as can be brought into and away from abutment against the spool 251 when its radially differential portion is fed with the linear solenoid valve signal pressure ($P_{SLU}$) and when its end face is fed with the brake B-2 pressure of an oil passage 204a leading to the oil passage 204 of the brake B-2 through the 2-3 shift valve 22. This B-3 control valve 25 is further equipped with the plunger 253 which is disposed at the opposite side of the plunger 252 for changing the spring load upon the spool 251, such that the D-range pressure ($P_D$) of the oil passage 201b can be applied to and released from the end face of the plunger 253 through the B-2 release valve 24.

The relay valve 26 is a spring-loaded spool type change-over valve, and the brake B-2 pressure of the oil passage 204 and a line pressure ($P_L$) are fed in opposite directions to the end of the spool at the spring-loaded side and to the other spool end, to switch the communications between the brake B-3 oil passage 203b and the oil passages 201a and 203a.

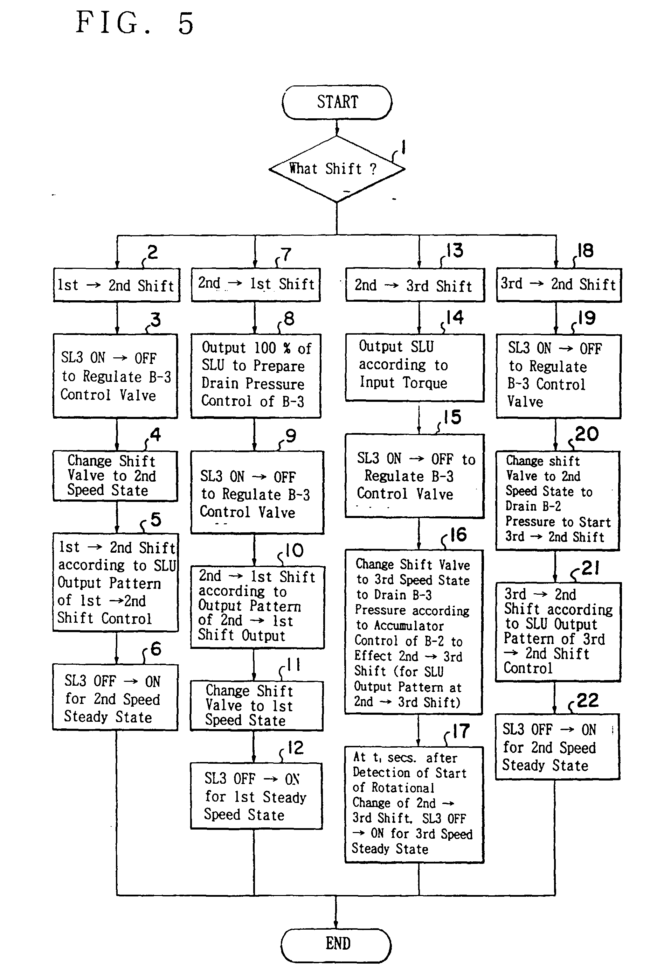

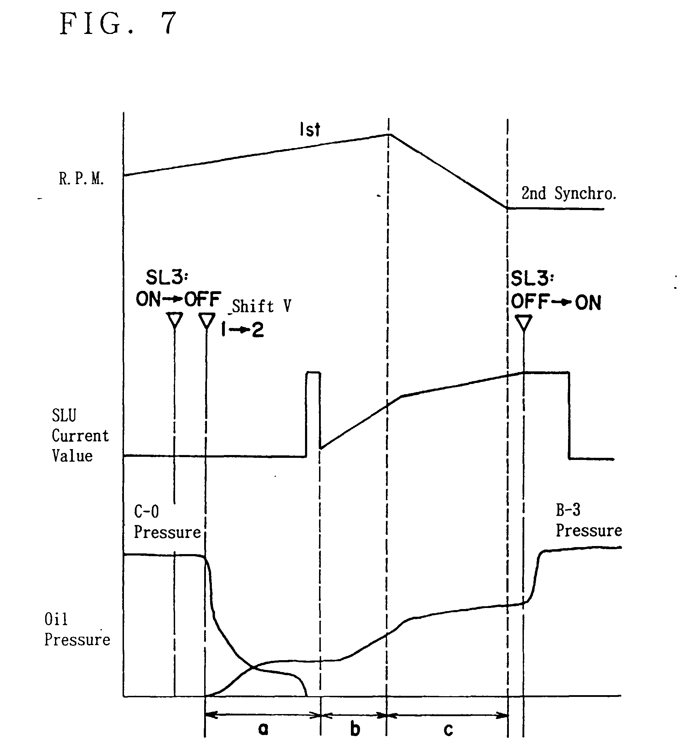

The operations of the circuit thus constructed will be described in the following with reference to the flow chart of Fig. 5 and the time charts of Figs. 7 to 10.

(1) 1st → 2nd Shift Control Operations

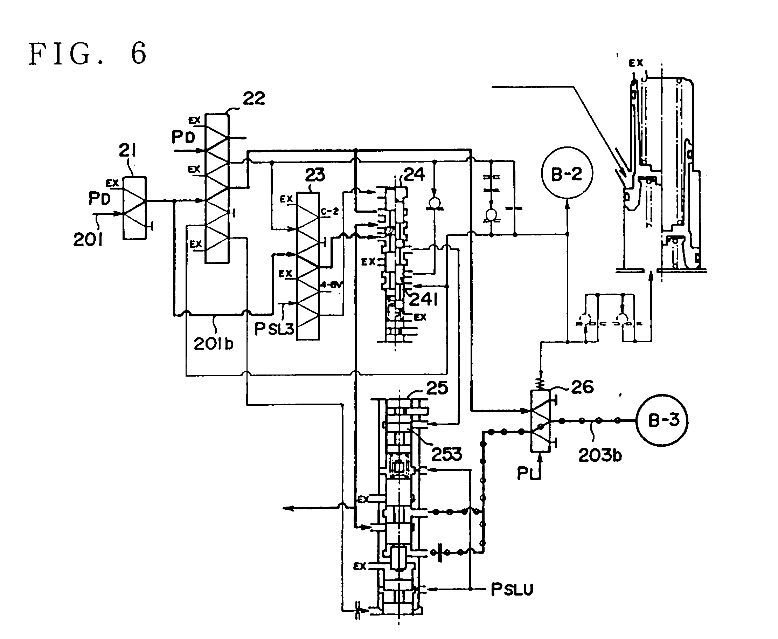

If the 1st → 2nd shift of Step 2 is decided at Step 1, the solenoid valve SL3 is switched from ON to OFF at Step 3 prior to the switching of the 1-2 shift valve 21, to bring the B-2 release valve 24 to a righthand half position, as shown in Fig. 6. At next Step 4, the 1-2 shift valve 21 is changed to a 2nd-speed state to feed the servo means through the relay valve 26 and the oil passage 203b with the D-range pressure ($P_D$), which comes through the (not-shown) manual valve, the oil passage 201, the 1-2 shift valve 21, the oil passage 201b, the 3-4 shift valve 23 and the B-2 release valve 24, as the brake B-3 pressure through the B-3 control valve 25, and to drain the clutch C-0 pressure. From now on, the brake B-3 pressure in sections a, b and c, as shown in Fig. 7, is directly controlled by the B-3 control valve 25 according to Step 5. Specifically, during the piston stroke (corresponding to the section a) of the servo means, the oil pressure level for the fast fill is set by the force of the return spring of the servo means. In the section b, the output ($P_{SLU}$) of the linear solenoid valve SLU is raised at a predetermined rate to change the rotation. In the section c, the linear solenoid valve SLU is subjected to a feedback control according to a target rotation change. When the end of the 1st → 2nd speed shift (i.e., in the 2nd synchronization) is reached, the solenoid valve signal pressure ($P_{SL3}$) is released at Step 6, when the solenoid valve SL3 is turned ON. to change the B-2 release valve 24 to a lefthand half position of Fig. 6 to apply the D-range pressure ($P_D$) through the B-2 release valve 24 to the plunger 253 of the B-3 control valve 25. On the other hand, the D-range pressure ($P_D$) through the B-2 release valve 24, as switched from another passage through the 2-3 shift valve 22, is continuously fed to the servo means through the B-3 control valve 25 to raise the brake B-3 pressure quickly to the line pressure ($P_L$) until the shift is ended. As a result, in the 2nd-speed (2nd) steady state, the B-3 control valve 25 has its plunger 253 pushed down by the line pressure ($P_L$) and its spool 251 locked in the lowermost position of the drawing. On the other hand, the spool 241 of the B-2 release valve 24 has been returned to the upper position of the drawing because the solenoid valve SL3 signal pressure ($P_{SL3}$) is released.

(2) 2nd → 1st Shift Control Operations

Simultaneously with a shift decision of Step 7, the output of the linear solenoid valve SLU is increased to 100 % to prepare the drain control of the brake B-3 pressure. At next Step 9, the solenoid valve SL3 is switched from ON to OFF to bring the B-2 release valve 24 to the righthand half position of the drawing to release the B-3 control valve 25 from its locked state. From now on, the drainage of the brake B-3 pressure is directly controlled by the output of the linear solenoid valve SLU. After the 1st speed (1st) synchronization of Step 10, the 1-2 shift valve 21 is changed at Step 11 to its 1st-speed state to inthe feed of the brake B-3 pressure. Finally, the solenoid valve SL3 is switched at Step 12 from OFF to ON to switch the C-0 exhaust valve to start the feed of the clutch C-0 pressure.

### (3) 2nd → 3rd Shift Control Operations

Simultaneously with a shift decision of Step 13, the output of the linear solenoid valve SLU is increased to 100 % so that it is set to a value according to the input torque when the solenoid valve SL3 is switched from ON to OFF. Next, the solenoid valve SL3 is switched from ON to OFF to bring the B-2 release valve 24 to a righthand half position, as shown in Fig. 1, so that the application of the line pressure to the end of the plunger 253 is released through the B-2 release valve 24 to release the B-3 control valve 25 from its locked state. After this, the 2-3 shift valve 22 is switched to the 3rd-speed side to start the feed of the D-range pressure ($P_D$) through the 2-3 shift valve 22 to the servo means of the brake B-2 pressure. By the B-3 control valve 25, the brake B-3 pressure is regulated (as in the section a) to the necessary minimum according to the rise of the brake B-2 pressure. The inertia phase is subjected to the feedback control (as in the section b) by the back pressure control of the B-2 accumulator 27. In order to prevent the simultaneous locking, a timer control is made to turn ON the solenoid valve SL3 to interrupt the feed of the brake B-3 pressure and start the feed of the clutch C-O pressure by the B-2 release valve 24. At the end of the accumulation of the B-2 accumulator 27, moreover, the relay valve 26 is switched to shut the brake B-3 oil passage, thus ending the shift.

### (4) 3rd-Speed (3rd) State

The D-range pressure ($P_D$) is applied not only to the end of the plunger 253 through the 1-2 shift valve 21, the 3-4 shift valve 23 and the B-2 release valve 24 but also to the end of the plunger 252 through the 2-3 shift valve 22, to move the two plungers 253 and 252 upward together with the spool 251 by the difference between their pressure receiving areas so that the three components are locked in the abutting state while compressing the spring.

### (5) 3rd → 2nd Shift Control Operations

Prior to the switching of the 2-3 shift valve 22, the solenoid valve SL3 is switched at Step 19 from ON to OFF to bring the B-2 release valve 24 to the righthand half position of Fig. 1 to release the B-3 control valve 25 from its locked state and to start the feed the brake B-3 pressure. At next Step 20, the 2-3 shift valve 22 is changed to the 2nd-speed state to start the small-orifice drainage of the brake B-2 pressure. By the fast fill of the brake B-3, the piston stroke is ended (as in the section a) prior to the 2nd-speed (2nd) synchronization. At Step 21, the rotation change is controlled (as in the section b) by the back pressure control of the B-2 accumulator.

At a high-speed run, the brake B-3 pressure is on standby at a low level and elevated according to the synchronization. At a low-speed run, the brake B-2 pressure is held. and the synchronization is achieved by gradually controlling the brake B-3 pressure. After the 2nd-speed (2nd) synchronization, the solenoid valve SL3 is switched at Step 22 from OFF to ON to switch the B-2 release valve 24 to effect the quick drainage of the brake B-2 and the quick application of the brake B-3, this ending the shift.

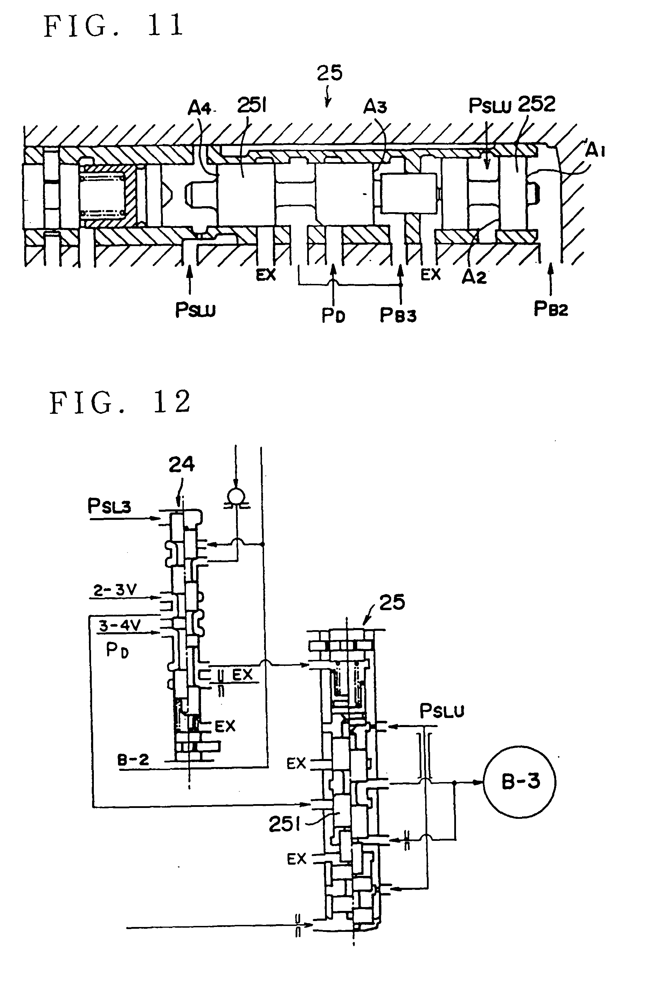

Here will be described the reason for making the linear solenoid valve pressure ($P_{SLU}$) receiving area of the B-3 control valve 25 larger at the 2nd → 3rd shifting time than at the 1st → 2nd, 2nd → 1st and 3rd → 2nd shifting times, with reference to Fig. 11 (in which the B-3 control valve, as shown, is slightly different in the manner to apply the spring load from the foregoing valve but is substantially identical in the relation between the spool 251 and the plunger 252). The B-3 control valve 25 may have a pressure regulating function to regulate the brake B-3 oil pressure within the oil pressure range of the linear solenoid valve pressure ($P_{SLU}$), at the 1st → 2nd, 2nd → 1st and 3rd → 2nd shifting times, thereby to retain the torque capacity of the brake B-3. If, therefore, the plunger 252 has a pressure receiving area $A_1$ at its end face and a pressure receiving area $A_2$ at its radially different portion, and if the spool 251 has a pressure receiving area $A_3$ at its radially different portion and a pressure receiving area $A_4$ at its land end face, the brake B-3 pressure ($P_{B3}$) may satisfy the following relation:

$$P_{B3} = A_4 \times P_{SLU}/A_3 \qquad (1).$$

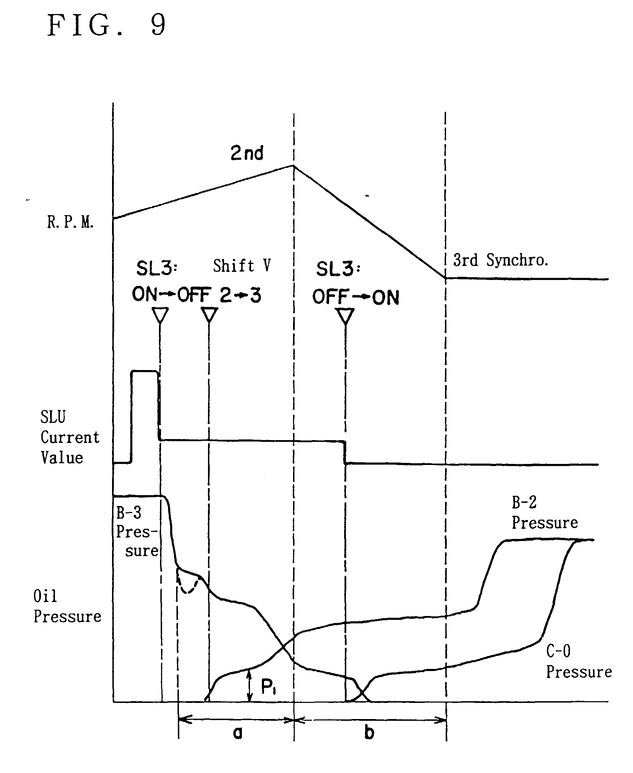

At the 2nd → 3rd shifting time, on the other hand, the torque capacity of the brake B-3 has to be retained at the brake B-3 oil pressure in the state where the oil pressure ($P_1$) (as shown in Fig. 9) for the brake B-2 oil pressure to overcome the return spring force is acting upon the B-3 control valve 25, the brake B-3 pressure ($P_{B3}'$) at that time has to retain the torque capacity while satisfying the following relation:

$$P_{B3}' = (A_4' \times P_{SLU} - A_1 \times P_{B2})/A_3 \qquad (2),$$

wherein $A_4' = A_4 + A_2$. Moreover, it is conceivable that the brake B-3 oil pressure is temporarily lowered (as indicated by a broken curve in Fig. 9) by switching the circuit at the 2nd → 3rd shifting time. In order to correct this drop, the brake B-3 oil pressure ($P_{B3}$) has to be set to a high level, as follows:

$$P_{B3}' > P_{B3} \qquad (3).$$

From these relations (1), (2) and (3), it is concluded that the pressure receiving area $A_4'$ of the linear solenoid pressure $P_{SLU}$) has to be higher at the 2nd → 3rd shifting time than at the 1st → 2nd, 2nd → 1st and 3rd → 2nd shifting times.

In short, according to the control system of the embodiment thus far described, the force to stand against the oil pressure component, which is to be applied to the control valve 25 from the brake B-2 or the frictional engagement element to be applied at the grip-change shifting time, can be retained not by the external control signal pressure ($P_{SLU}$) itself but by increasing the receiving area of the signal pressure. As a result, that extension of the output width of the external control signal pressure ($P_{SLU}$), which might otherwise be caused by unifying the valve, can be eliminated to make the control system compact while preventing deterioration of the accuracy. Moreover, the oil pressure for regulating the oil pressure of the brake B-3 (i.e., the first frictional engagement element) is fed to the control valve 25 through the 1-2 shift valve 21 which is not switched at the grip-change shifting time. As a result, it is possible to avoid that transient drop of the oil pressure of the brake B-3, which might otherwise be caused at the grip-change shifting time by switching the 2-3 shift valve 22 directly participating in that shift, thereby to lighten the shifting shock. By the control of the relay valve 26 with the oil pressure coming from the brake B-2 or the second frictional engagement element, still moreover, the-oil pressure of the brake B-3 or the first frictional engagement element can be released independently of the action of the control valve 25. As a result, the oil pressure of the brake B-3 can be prevented from being confined, even in case the control valve 25 sticks in the closed stage.

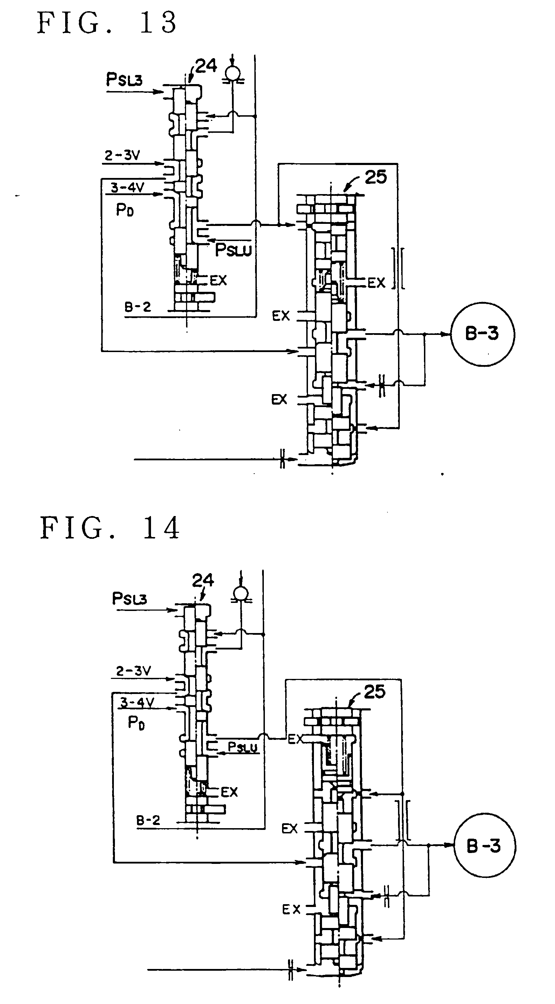

Although the present invention has been described in detail in connection with its embodiment, it should not be limited thereto but can have its specific construction modified in various manners within the scope of the definition made by Claims. For example, the method of applying the linear solenoid valve SLU pressure to the B-3 control valve 25 can be modified by circuit constructions of Figs. 12 to 14. Fig. 12 presents an embodiment, in which the valve shown in Fig. 11 is arranged in the circuit shown in Fig. 1. In the foregoing embodiment, the linear solenoid valve SLU pressure ($P_{SLU}$) and the spring load are applied in parallel with the spool 251 (i.e., in the direction of addition) so that the pressure regulation has to be made with the low linear solenoid valve SLU pressure ($P_{SLU}$) to invite a disadvantage in the pressure regulating accuracy and responsibility. In the embodiment of Fig. 12, on the contrary, those two forces are applied in series (i.e., in the opposing directions) so that the pressure regulation can be made under a higher linear solenoid valve SLU pressure ($P_{SLU}$) to provide an advantage in the pressure regulating accuracy and responsibility. On the other hand, Fig. 13 presents an embodiment, in which the linear solenoid valve SLU pressure ($P_{SLU}$) is applied to the control valve 25 of the embodiment of Fig. 1 through the B-2 release valve 24. Fig. 14 presents an embodiment in which a similar construction is applied to the valve of Fig. 11.

In the foregoing embodiment, on the other hand, the feeding/releasing oil passage of the brake B-3 is arranged with the B-2 release valve 24, the B-3 control valve 25 and the relay valve 26 in the recited order. This order is intended to take an advantage of ensuring drainage of the brake B-3 pressure by the relay valve 26, even if the brake B-3 pressure is confined due to an intermediate failure of the B-3 control valve 25, and an advantage of eliminating the flow loss by controlling the B-2 release valve 24 or the B-3 control valve 25 with the solenoid valve SL3, at the N → D shifting time for a 3rd-speed state, to interrupt the feed of the pressure to the B-3 control valve 25. Moreover, the embodiment is constructed such that the relay valve 26 is interposed in series between the B-3 control valve 25 and the brake B-3, as described above. At the time of a failure, when the relay valve 26 is locked in its drained state while the B-3 control valve 25 being in its fed state, there can be taken an advantage of eliminating the problem that the brake B-3 pressure is drained, while ensuring the drainage at the failure time between the B-3 control valve 25 and the brake B-3.

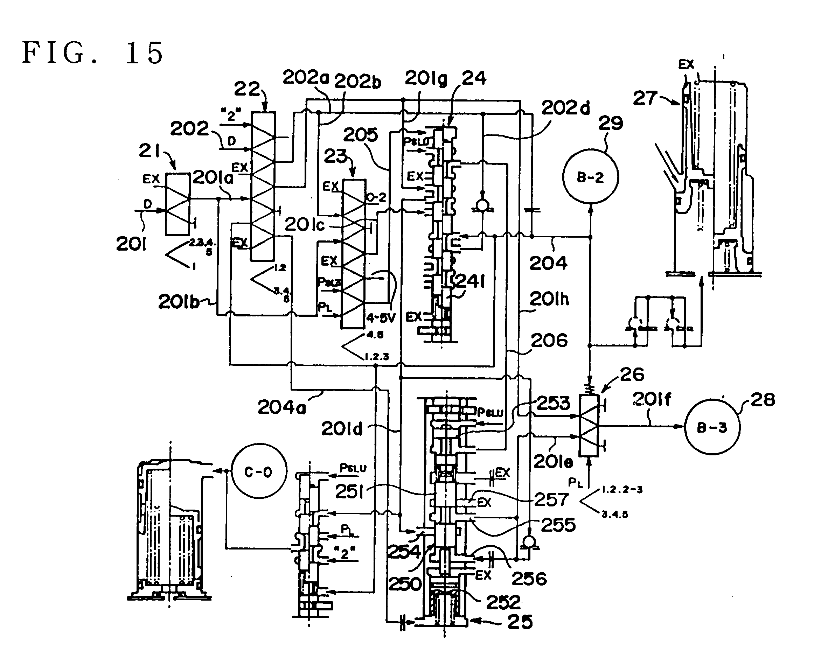

Next, a fifth embodiment of the present invention will be described with reference to Figs. 15 to 19. In the automatic transmission 10 of this construction, according to this embodiment of the present invention, the first frictional engagement element is exemplified by the brake B-3, and the second frictional engagement element is exemplified by the brake B-2. Specifically, as only the related portions are shown in Fig. 15, the automatic transmission 10 is constructed of: a brake B-3; a hydraulic servo 38 for controlling the application/release of the brake B-3; an oil passage 301 connected to the hydraulic servo 38 for feeding/ releasing the oil pressure to/from the hydraulic servo 38; a B-3 control valve 35 as a regulator valve disposed in the oil passage 301; and signal pressure generating means (as specified by the linear solenoid valve SLU shown in Fig. 4 and so on) for applying a signal pressure to the B-3 control valve 35.

The oil passage 301 is composed of a first oil passage for feeding the oil pressure to the B-3 control valve 35, and second oil passages 301e and 301f for feeding the oil pressure from the B-3 control valve 35 to the hydraulic servo 38. The B-3 control valve 35 is equipped with a valve member 350, an input port 354 connected to the first oil passage 301d, an output port 355 connected to the second oil passage 301e, and a drain port 357 connected to a drain oil passage EX.

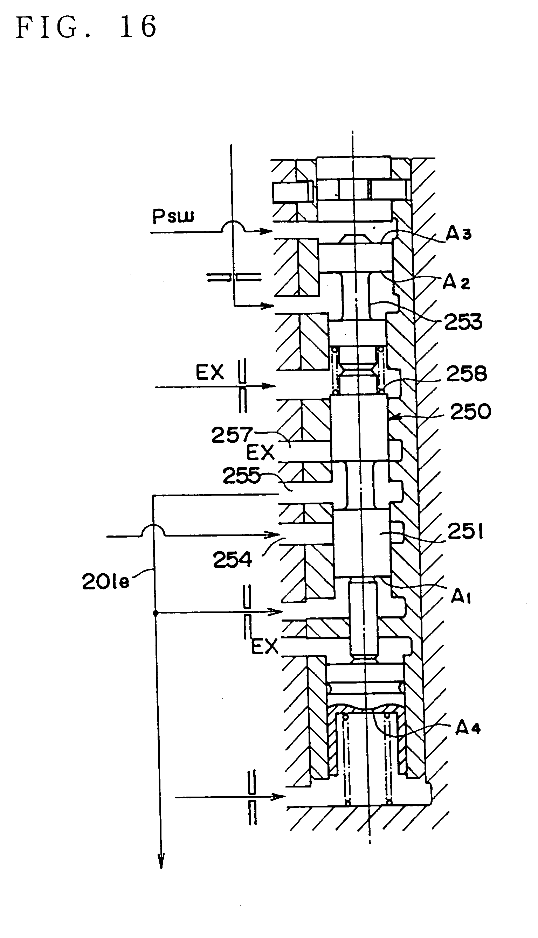

As shown in an enlarged scale in Fig. 16, the valve member 350 has: a first pressure receiving area $A_1$ to which is applied the feedback pressure of the second oil passage 301e in a direction to provide communication between the output port 355 and the drain port 357; a second pressure receiving area $A_2$ to which is applied the signal pressure ($P_{SLU}$) in a direction to provide the communication between the output port 355 and the drain port 357; and a third pressure receiving area $A_3$ which has a larger diameter than that of the second pressure receiving area $A_2$ and to which is applied the signal pressure ($P_{SLU}$) in a direction to provide communication between the output port 355 and the input port 354. The signal pressure generating means (e.g., the linear solenoid valve SLU) always applies the signal pressure ($P_{SLU}$) to the third pressure receiving area $A_3$ and selectively applies the signal pressure ($P_{SLU}$) to the second pressure receiving area $A_2$.

The valve member 350 of the B-3 control valve 35 is composed of a spool 351 having the first pressure receiving area $A_1$, and a plunger 353 arranged coaxially with the spool 351 and having the second and third pressure receiving areas $A_2$ and $A_3$. Between the spool 351 and the plunger 353, there is arranged a spring 358 which is biased to move the spool 351 and the plunger 353 apart from each other.

Reverting to Fig. 15, the brake B-3 is exemplified in the present embodiment as the first frictional engagement element for establishing the first gear stage, i.e., the 2nd speed of the automatic transmission, and the brake B-2 to be applied to establish the second gear stage, i.e., a 3rd speed of the automatic transmission when the brake B-3 is released is provided as the second frictional engagement element. The signal pressure generating means includes a B-2 release valve 34 as a change-over valve for switching the application/interruption of the signal pressure ($P_{SLU}$) to the second pressure receiving area $A_2$. The B-2 release valve 34 is constructed to apply the signal pressure ($P_{SLU}$) to the third pressure receiving area $A_3$ at at least the shifting time from 2nd to 3rd speeds and to interrupt the application of the signal pressure ($P_{SLU}$) to the third pressure receiving area $A_3$ after the end of the shift.

The brake B-2 to be applied when the brake B-3 is released has a hydraulic servo 39 for controlling the application/release of the brake B-2. The valve member 350 of the B-3 control valve 35 has a fourth pressure receiving area $A_4$ to which is applied the application pressure of the hydraulic servo 39 in a direction to provide the communication between the output port 355 and the drain port 357.

The circuit portion directly participates in regulating and feeding/releasing the oil pressures of the hydraulic servos 38 and 39 for applying/releasing the frictional members of the brake B-3 and the brake B-2 including the aforementioned individual elements is arranged with a 1-2 shift valve 31, a 2-3 shift valve 32, a 3-4 shift valve 33, a B-2 release valve 34, a B-3 control valve 35, a relay valve 36 and a B-2 accumulator 37. These circuit components are controlled by the solenoid valves SL1 to SL4 for switching the individual shift valves, the lockup linear solenoid valve SLU, the accumulator controlling linear solenoid valve SLN for controlling the B-2 accumulator 37 and its back pressure, the linear solenoid valve SLT for outputting the control signal according to the engine load, and so on. Incidentally, the oil pressure for regulating the brake B-3 oil pressure is fed to the control valve 35 through the 1-2 shift valve 31. Between the control valve 25 and the brake B-3, moreover, there is arranged the relay valve 36 to be controlled by the oil pressure coming from the brake B-2.

The connections between the aforementioned individual valves and oil passages will be described in detail in the following. A D-range oil passage 301 leading to the not-shown manual valve is branched through the 1-2 shift valve 31, and one branch oil passage 301a is connected through the 2-3 shift valve 32 via an oil passage 301h to the relay valve 36 and further through the valve 36 to the brake B-3 oil passage 301f. The other branch oil passage 301b leads through the 3-4 shift valve 33, an oil passage 301c, the B-2 release valve 34 and the oil passage 301d to the input port 354 of the B-3 control valve 35, from which the oil passage 301b is connected through the oil passage 301e to the relay valve 36.

The other D-range pressure oil passage 302 leading to the manual valve is branched through the 2-3 shift valve 32, and one branch oil passage 302a is connected through an orifice to a brake B-2 oil passage 304. This oil passage 304 is connected through the B-2 release valve 34 and a check valve to the oil passage 302a and through an orifice to the accumulator 37. The other branch oil passage 302b is connected through the 3-4 shift valve 33 to the hydraulic servo of the clutch C-2.

The 3-4 shift valve 33 is so connected through a solenoid valve signal pressure oil passage 305 to the B-2 release valve 34 as not only to provide and interrupt the communication between the two oil passages 301b and 302b but also to apply a solenoid valve SL3 signal pressure ($P_{SL3}$) to the spool end of the B-2 release valve 34.

The B-2 release valve 34 is formed with a bypass circuit for accelerating the drainage of the oil passage of the accumulator 37 at the release end of the brake B-2 and is equipped with a spring-loaded spool 341. The B-2 release valve 34 is fed at the end of the spool 341 with the signal pressure ($P_{SL3}$) of the solenoid valve SL3 by way of the 3-4 shift valve 33 so as to provide and interrupt the communication of a bypass oil passage 302d with the brake B-2 oil passage 304, to switch the communication of the D-range pressure oil passages 301c and 301g with the input port 354 of the B-3 control valve 35, and to switch the application of the signal pressure ($P_{SLU}$) to the pressure receiving area $A_2$ of the B-3 control valve 35 via an oil passage 206 and the connection of an oil passage 306 to the drain. As a result, the input port 354 of the B-3 control valve 35 can be fed with the D-range pressure ($P_D$) from the two oil passages 301a and 301b through the B-2 release valve 34 in parallel.

The B-3 control valve 35 is constructed such that the oil pressure of the oil passage 301e leading to the output port 355 is regulated by controlling the input port 354 with one and the drain port 357 with the other of the two lands, which are formed on the spool 351, by a feedback pressure fed to the end of the spool 351 through a feedback signal pressure in-port 356. The construction is further made such that a plunger 352 arranged coaxially with the spool 351 pushes the spool 351 when it is fed at its end face with the brake B-2 applying pressure of an oil passage 304a leading to the oil passage 304 of the brake B-2 through the 2-3 shift valve 32. This B-3 control valve 35 is equipped like before with the plunger 353 which is disposed at the opposite side of the plunger 352 for pushing the spool 351 through the spring 358, such that the solenoid valve signal pressure ($P_{SLU}$) can be applied to and released from one end face of the plunger 353 at all times and the other end face via the oil passage 306 through the B-2 release valve 34.

Incidentally, the relay valve 36 is a spring-loaded spool type change-over valve, and the brake B-2 pressure of the oil passage 304 and the line pressure ($P_L$) are fed in opposite directions to the end of the spool at the spring-loaded side and to the other spool end, to switch the communications between the brake B-3 oil passage 301f and the oil passages 301e and 301h.

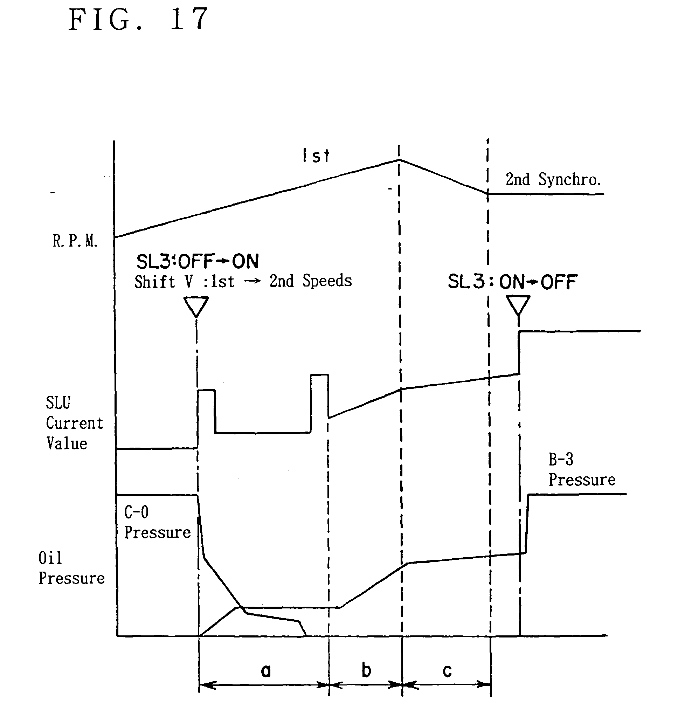

The operations of the circuit thus constructed will be described in the following with reference to the circuit diagram of Fig. 15 and the time charts of Figs. 17 to 19.

(1) 1st → 2nd Shift Control Operations (Fig. 17)

If the 1st → 2nd shift 2 is decided by the electronic control system, the solenoid valve SL3 is switched from OFF to ON to bring the B-2 release valve 34 to a lefthand half position, as shown in Fig. 1. As a result. the signal pressure ($P_{SLU}$) through the B-2 release valve 34 and the oil passage 306 is applied so that the B-3 control valve 35 comes into a small control gain state. Next, the 1-2 shift valve 31 is changed to a 2nd-speed state to feed the hydraulic servo 38 through the relay valve 36 and the oil passage 301f with the D-range pressure ($P_D$), which comes through the (not-shown) manual valve, the oil passage 301, the 2-3 shift valve 32, the oil passage 301g, the B-2 release valve 34 and the oil passage 301d as the brake B-3 pressure through the B-3 control valve 35, and to drain the clutch C-0 pressure. From now on, the brake B-3 pressure in sections a, b and c, as shown in Fig. 17, is directly controlled by the B-3 control valve 35. Specifically. during the piston stroke (corresponding to the section a) of the hydraulic servo, the oil pressure level for the fast fill is set by the force of the return spring 358 of the hydraulic servo. In the section b, the output ($P_{SLU}$) of the linear solenoid valve SLU is raised at a predetermined rate to change the rotation. In the section c, the linear solenoid valve SLU is subjected to a feedback control according to a target rotation change. When the end of the 1st → 2nd speed shift (i.e., in the 2nd synchronization) is reached, the solenoid valve signal pressure ($P_{SL3}$) is applied, when the solenoid valve SL3 is turned OFF, to change the B-2 release valve 34 to a righthand half position of Fig. 17 to release the signal pressure ($P_{SLU}$) at the pressure receiving area $A_2$ of the plunger 353 of the B-3 control valve 35 to bring the B-3 control valve 35 into a large gain state. The D-range pressure ($P_D$) through the B-2 release valve 34, as switched from another passage 301c through the 1-2 shift valve 31, is continuously fed to the hydraulic servo through the B-3 control valve 35 to raise the brake B-3 pressure quickly to the line pressure ($P_L$) until the shift is ended. As a result, in the 2nd-speed (2nd) steady state, the spool 351 is locked in the lowermost position of the drawing. On the other hand, the spool 341 of the B-2 release valve 34 is fixed in its lower position of the drawing because the solenoid valve SL3 signal pressure ($P_{SL3}$) is fed.

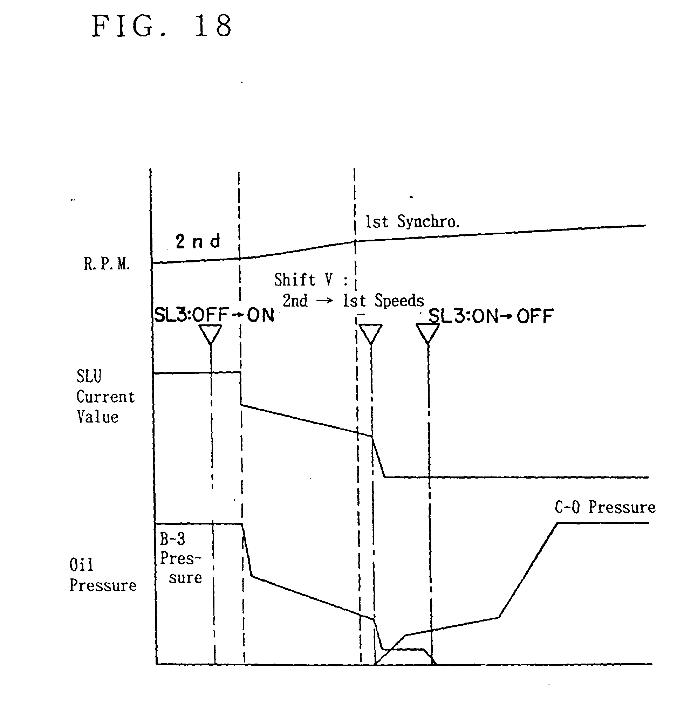

(2) 2nd → 1st Shift Control Operations (Fig. 18)

Simultaneously with a shift decision, the output of the linear solenoid valve SLU is increased to 100 % to prepare the drain control of the brake B-3 pressure. Next, the solenoid valve SL3 is switched from OFF to ON to bring the B-2 release valve 34 to the lefthand half position of the drawing to bring the B-3 control valve 35 into a low gain state. From now on, the drainage of the brake B-3 pressure is directly controlled by the output of the linear solenoid valve SLU. After the 1st speed (1st) synchronization, the 1-2 shift valve 31 is changed to its 1st-speed state to interrupt the feed of the brake B-3 pressure to switch the C-0 exhaust valve to start the feed of the C-0 pressure. After the end of the 2nd → 1st shift is decided, the solenoid valve SL3 is switched from ON to OFF to return the B-2 release valve 34 to the righthand half position of the drawing to ensure the large drain state of the brake B-2 pressure.

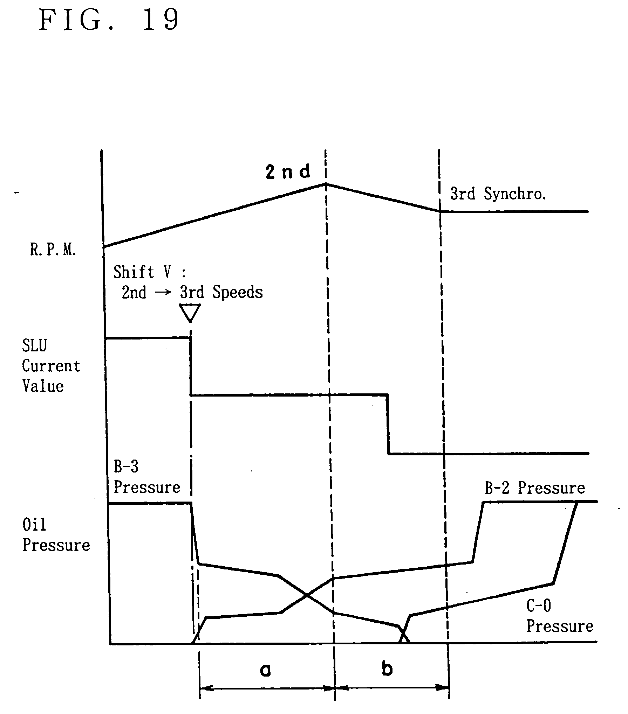

(3) 2nd → 3rd Shift Control Operations (Fig. 19)

On the basis of the shift decision, the 2-3 shift valve 32 is switched to the 3rd-speed side to start the feed of the D-range pressure ($P_D$) through the 2-3 shift valve 32 to the servo means of the brake B-2 pressure. By the B-3 control valve 35, the brake B-3 pressure is regulated (as in the section a) to the necessary minimum according to the rise of the brake B-2 pressure. The inertia phase is subjected to the feedback control (as in the section b) by the back pressure control of the B-2 accumulator 37. At the end of the accumulation of the B-2 accumulator 37, moreover, the relay valve 36 is switched to shut the brake B-3 oil passage, thus ending the shift.

In short, according to the control system of the fifth embodiment thus far described, the force to stand against the oil pressure component, which is to be applied to the B-3 control valve 35 from the brake B-2 or the frictional engagement element to be applied at the grip-change shifting time (i.e., the 2nd → 3rd shifting time), can be retained not by the external control signal pressure ($P_{SLU}$) itself but by increasing the receiving area of the signal pressure. As a result, that extension of the output width of the external control signal pressure ($P_{SLU}$), which might otherwise be caused by unifying the valve, can be eliminated to make the control system compact while preventing deterioration of the accuracy.

## Claims

1. A control system (20) for an automatic transmission (10) comprising: a first frictional engagement element (B-3) and a second frictional engagement element (B-2); a first hydraulic servo (28) for controlling the application/release of said first frictional engagement element (B-3) and a second hydraulic servo (29) for controlling the application/release of said second frictional engagement element (B-2); an oil passage (203) connected to said first hydraulic servo for feeding/releasing an oil pressure to/from said first hydraulic servo; a regulator valve (25) disposed in said oil passage (203) for regulating the oil pressure in said oil passage; and signal pressure generating means (SLU) for applying a signal pressure ($P_{SLU}$) to said regulator valve, whereby a predetermined gear stage is established by changing the grips of said first frictional engagement element (B-3) and said second frictional engagement element (B-2) by feeding/releasing the oil pressure to/from said first hydraulic servo and said second hydraulic servo.

   wherein said regulator valve (25) has a valve member (250), and

   wherein said valve member includes:

   a first pressure receiving area ($A_3$, $A_1$) to which is applied a feed pressure to said first hydraulic servo as a feedback pressure in a first direction; a second pressure receiving area ($A_4$, $A_3$) to which is applied said signal pressure ($P_{SLU}$) in a second direction opposite to said first direction; characterized by a fourth pressure receiving area ($A_1$, $A_4$) to which is applied a feed pressure to said second hydraulic servo in said first direction at a grip-change shifting time when said first frictional engagement element (B-3) is released whereas said second frictional engagement element (B-2) is applied; and a third pressure receiving area ($A_2$) to which is applied said signal pressure in said second direction, for participating in the regulation of the oil pressure in said first oil passage only at said shifting time.

2. A control system (20) for an automatic transmission (10) according to claim 1.

   wherein said valve member has a first valve member (252) having said first pressure receiving area ($A_1$) and said second pressure receiving area ($A_2$), and a second valve member (251) arranged coaxially with said first valve member (252) and having said third pressure receiving area ($A_2$) and said fourth pressure receiving area ($A_1$), and

   wherein said second valve member (251) comes into abutment against said first valve member (252) at said shifting time.

3. A control system (20) for an automatic transmission (10) comprising: a first frictional engagement element (B-3) and a second frictional engagement element (B-2) ; a first hydraulic servo (28) for controlling the application/release of said first frictional engagement element (B-3) and a second hydraulic servo (29) for controlling the application/release of said second frictional engagement element (B-2); an oil passage (203) connected to said first hydraulic servo (38) for feeding/releasing an oil pressure to/from said first hydraulic servo (28); a regulator valve (25) disposed in said oil passage (203) for regulating the oil pressure in said oil passage (203); and signal pressure generating means (SLU) for applying a signal pressure ($P_{SLU}$) to said regulator valve (25), whereby a predetermined gear stage is established by changing the grips of said first frictional engagement element (B-3) and said second frictional engagement element (B-2) by feeding/releasing the oil pressure to/from said first hydraulic servo (28) and said second hydraulic servo (29),

   wherein said regulator valve (25) includes a valve member (250), and

   wherein said valve member (250) includes:

   a first pressure receiving area ($A_3$) to which is applied a feed pressure to said first hydraulic servo (28) as a feedback pressure in a first direction; a second pressure receiving area ($A_4$) to which is applied said signal pressure ($P_{SLU}$) in a second direction opposite to said first direction; characterized by a fourth pressure receiving area ($A_1$) to which is applied a feed pressure to said second hydraulic servo (29) in said first direction at a grip-change shifting time when said first frictional engagement element (B-3) is released whereas said second frictional engagement element (B-2) is applied; and a third pressure receiving area ($A_2$) to which is applied said signal pressure ($P_{SLU}$) in said second direction, for withdrawing its-participation in the regulation of the oil pressure in said first oil passage (203) at said shifting time.

4. A control system (20) for an automatic transmission (10) according to claim 3,

wherein said third pressure receiving area ($A_2$) is not fed with said signal pressure ($P_{SLU}$) at said shifting time.

5. A control system (20) for an automatic transmission (10) according to claims 3 and 4,

wherein said signal pressure generating means (SLU) includes a change-over valve (24) for switching the feed and interruption of said signal pressure ($P_{SLU}$) to said third pressure receiving area ($A_2$), and
wherein said change-over valve (24) interrupts the feed of said signal pressure ($P_{SLU}$) to said third pressure receiving area ($A_2$) at said shifting time.

**Patentansprüche**

1. Steuerungssystem (20) für ein Automatikgetriebe (10), mit: einem ersten Reibungseingriffselement (B-3) und einem zweiten Reibungseingriffselement (B-2); einem ersten Hydraulikservoelement (28) zur Steuerung der Anwendung/des Lösens des ersten Reibungseingriffselementes (B-3) und einem zweiten Hydraulikservoelement (29) zur Steuerung der Anwendung/des Lösens des zweiten Reibungseingriffselementes (B-2); einem mit dem ersten Hydraulikservoelement verbundenen Ölkanal (203) zum Zuführen/Ablassen eines Öldruckes zum/vom ersten Hydraulikservoelement; einem im Ölkanal (203) angeordneten Regelventil (25) zum Regeln des Öldruckes im Ölkanal; und einer Signaldruckerzeugungseinrichtung (SLU) zum Anwenden eines Signaldruckes ($P_{SLU}$) auf das Regelventil, wodurch eine vorherbestimmte Übersetzungsstufe hergestellt wird durch Änderung des Griffes des ersten Reibungseingriffselementes (B-3) und des zweiten Reibungseingriffselementes (B-2) durch Zuführen/Ablassen des Öldruckes zum/vom ersten Hydraulikservoelement und dem zweiten Hydraulikservoelement,
wobei das Regelventil (25) ein Ventilglied (250) aufweist, und
wobei das Ventilglied aufweist:

eine erste Druckaufnahmefläche ($A_3, A_1$), auf die ein Einspeisedruck auf das erste Hydraulikservoelement als ein Rückwirkungsdruck in eine erste Richtung angewendet wird;
eine zweite Druckaufnahmefläche ($A_4, A_3$), auf

die der Signaldruck ($P_{SLU}$) in eine zweite Richtung entgegengesetzt zur ersten Richtung angewendet wird; gekennzeichnet durch eine vierte Druckaufnahmefläche ($A_1, A_4$), auf die ein Einspeisedruck zum zweiten Hydraulikservoelement in die erste Richtung zu einer Griffänderungsschaltzeit angewendet wird, wenn das erste Reibungseingriffselement (B-3) gelöst wird, wohingegen das zweite Reibungseingriffselement (B-2) angewendet wird; und
eine dritte Druckaufnahmefläche ($A_2$), auf die der Signaldruck in die zweite Richtung angewendet wird, zur Beteiligung an der Regelung des Öldruckes im ersten Ölkanal nur bei der Schaltzeit.

2. Steuerungssystem (20) für ein Automatikgetriebe (10) nach Anspruch 1,

wobei das Ventilglied aufweist: ein erstes Ventilglied (252), das die erste Druckaufnahmefläche ($A_1$) und die zweite Druckaufnahmefläche ($A_2$) aufweist, und ein zweites Ventilglied (251), das koaxial mit dem ersten Ventilglied (252) angeordnet ist und die dritte Druckaufnahmefläche ($A_2$) und die vierte Druckaufnahmefläche ($A_1$) aufweist und
wobei das zweite Ventilglied (251) zur Schaltzeit in Anschlag gegen das erste Ventilglied (252) kommt.

3. Steuerungssystem (20) für ein Automatikgetriebe (10), mit: einem ersten Reibungseingriffselement (B-3) und einem zweiten Reibungseingriffselement (B-2); einem ersten Hydraulikservoelement (28) zur Steuerung der Anwendung/des Lösens des ersten Reibungseingriffselementes (B-3) und einem zweiten Hydraulikservoelement (29) zur Steuerung der Anwendung/des Lösens des zweiten Reibungseingriffselementes (B-2); einem mit dem ersten Hydraulikservoelement (28) verbundenen Ölkanal (203) zum Zuführen/Ablassen eines Öldruckes zum/vom ersten Hydraulikservoelement (28); einem im Ölkanal (203) angeordneten Regelventil (25) zum Regeln des Öldruckes im Ölkanal (203); und einer Signaldruckerzeugungseinrichtung (SLU) zum Anwenden eines Signaldruckes ($P_{SLU}$) auf das Regelventil (25), wodurch eine vorherbestimmte Übersetzungsstufe hergestellt wird durch Änderung des Griffes des ersten Reibungseingriffselementes (B-3) und des zweiten Reibungseingriffselementes (B-2) durch Zuführen/Ablassen des Öldruckes zum/vom ersten Hydraulikservoelement (28) und dem zweiten Hydraulikservoelement (29),
wobei das Regelventil (25) ein Ventilglied (250) aufweist, und
wobei das Ventilglied (250) aufweist:

eine erste Druckaufnahmefläche ($A_3$), auf die ein Einspeisedruck auf das erste Hydraulikservoelement (28) als ein Rückwirkungsdruck in eine erste Richtung angewendet wird;

eine zweite Druckaufnahmefläche ($A_4$), auf die der Signaldruck ($P_{SLU}$) in eine zweite Richtung entgegengesetzt zur ersten Richtung angewendet wird; gekennzeichnet durch

eine vierte Druckaufnahmefläche ($A_1$), auf die ein Einspeisedruck zum zweiten Hydraulikservoelement (29) in die erste Richtung zu einer Griffänderungsschaltzeit angewendet wird, wenn das erste Reibungseingriffselement (B-3) gelöst wird, wohingegen das zweite Reibungseingriffselement (B-2) angewendet wird; und

eine dritte Druckaufnahmefläche ($A_2$), auf die der Signaldruck ($P_{SLU}$) in die zweite Richtung angewendet wird, zum Zurückziehen seiner Beteiligung an der Regelung des Öldruckes im ersten Ölkanal (203) bei der Schaltzeit.

4. Steuerungssystem (20) für ein Automatikgetriebe (10) nach Anspruch 3,

wobei die dritte Druckaufnahmefläche ($A_2$) zur Schaltzeit nicht mit dem Signaldruck ($P_{SLU}$) versorgt wird.

5. Steuerungssystem (20) für ein Automatikgetriebe (10) nach Anspruch 3 und 4,

wobei die Signaldruckerzeugungseinrichtung (SLU) ein Umschaltventil (24) aufweist zum Schalten der Zufuhr und Unterbrechung des Signaldruckes ($P_{SLU}$) zu der dritten Druckaufnahmefläche ($A_2$), und wobei das Umschaltventil (24) die Zufuhr des Signaldruckes ($P_{SLU}$) zur dritten Druckaufnahmefläche ($A_2$) zur Schaltzeit unterbricht.

## Revendications

1. Système de commande (20) pour transmission automatique (10) comprenant : un premier élément d'engagement par friction (B-3) et un deuxième élément d'engagement par friction (B-2); un premier servomécanisme hydraulique (28) pour commander l'application/relâchement dudit premier élément d'engagement par friction (B-3) et un deuxième servomécanisme hydraulique (29) pour commander l'application/relâchement dudit deuxième élément d'engagement par friction (B-2); un passage d'huile (203) connecté audit premier servomécanisme hydraulique pour appliquer/relâcher une pression d'huile audit/dudit premier servomécanisme hydraulique; une soupape de régulation (25) disposée dans ledit passage d'huile (203) pour réguler la pression d'huile dans ledit passage d'huile; et un dispositif générant une pression signal (SLU) pour appliquer une pression signal ($P_{SLU}$) à ladite soupape de régulation, dans lequel un rapport prédéterminé est établi en changeant l'adhérence dudit premier élément d'engagement par friction (B-3) et dudit deuxième élément d'engagement par friction (B-2) en appliquant/relâchant la pression d'huile audit/dudit premier servomécanisme hydraulique et audit/dudit deuxième servomécanisme hydraulique,

dans lequel ladite soupape de régulation (25) comporte un élément formant soupape (250), et

dans lequel ledit élément formant soupape inclut :

une première surface recevant de la pression ($A_3$, $A_1$) à laquelle est appliquée une pression d'alimentation audit premier servomécanisme hydraulique comme pression de rétroaction dans un premier sens;

une deuxième surface recevant de la pression ($A_4$, $A_3$) à laquelle est appliquée ladite pression signal (PSLU) dans un deuxième sens opposé audit premier sens;

caractérisé par une quatrième surface recevant de la pression ($A_1$, $A_4$) à laquelle est appliquée une pression d'alimentation audit deuxième servomécanisme hydraulique dans ledit premier sens à un temps de passage quand ledit premier élément d'engagement par friction (B-3) est relâché alors que ledit deuxième élément d'engagement par friction (B-2) est appliqué; et

une troisième surface recevant de la pression ($A_2$) à laquelle est appliquée ladite pression signal dans ledit deuxième sens, pour participer à la régulation de la pression d'huile dans ledit premier passage d'huile uniquement audit temps de passage.

2. Système de commande (20) pour transmission automatique (10) selon la revendication 1,

dans lequel ledit élément formant soupape comporte un premier élément formant soupape (252) comportant ladite première surface recevant de la pression ($A_1$) et ladite deuxième surface recevant de la pression ($A_2$), et un deuxième élément formant soupape (251) agencé coaxialement par rapport audit premier élément formant soupape (252) et comportant ladite troisième surface recevant de la pression ($A_2$) et ladite quatrième surface recevant de la pression ($A_1$) et

dans lequel ledit deuxième élément formant soupape (251) vient en appui contre ledit premier élément formant soupape (252) audit temps de passage.

3. Système de commande (20) pour transmission automatique (10) comprenant : un premier élément d'engagement par friction (B-3) et un deuxième élément d'engagement par friction (B-2); un premier servomécanisme hydraulique (28) pour commander l'application/relâchement dudit premier élément d'engagement par friction (B-3) et un deuxième servomécanisme hydraulique (29) pour commander l'application/relâchement dudit deuxième élément d'engagement par friction (B-2); un passage d'huile (203) connecté audit premier servomécanisme hydraulique (38) pour appliquer/relâcher une pression d'huile audit/dudit premier servomécanisme hydraulique (28); une soupape de régulation (25) disposée dans ledit passage d'huile (203) pour réguler la pression d'huile dans ledit passage d'huile; et un dispositif générant une pression signal (SLU) pour appliquer une pression signal ($P_{SLU}$) à ladite soupape de régulation (25), dans lequel un rapport prédéterminé est établi en changeant l'adhérence dudit premier élément d'engagement par friction (B-3) et dudit deuxième élément d'engagement par friction (B-2) en appliquant/relâchant la pression d'huile audit/dudit premier servomécanisme hydraulique (28) et audit/dudit deuxième servomécanisme hydraulique (29),

dans lequel ladite soupape de régulation (25) inclut un élément formant soupape (250), et

dans lequel ledit élément formant soupape (250) inclut :

une première surface recevant de la pression ($A_3$) à laquelle est appliquée une pression d'alimentation audit premier servomécanisme hydraulique (28) comme pression de rétroaction dans un premier sens;

une deuxième surface recevant de la pression ($A_4$) à laquelle est appliquée ladite pression signal ($P_{SLU}$) dans un deuxième sens opposé audit premier sens;

caractérisé par une quatrième surface recevant de la pression ($A_1$) à laquelle est appliquée une pression d'alimentation audit deuxième servomécanisme hydraulique (29) dans ledit premier sens à un temps de passage quand ledit premier élément d'engagement par friction (B-3) est relâché alors que ledit deuxième élément d'engagement par friction (B-2) est appliqué; et

une troisième surface recevant de la pression ($A_2$) à laquelle est appliquée ladite pression signal ($P_{SLU}$) dans ledit deuxième sens, pour retirer sa participation à la régulation de la pression d'huile dans ledit premier passage d'huile (203) audit temps de passage.

4. Système de commande (20) pour transmission automatique (10) selon la revendication 3,

dans lequel ladite troisième surface recevant de la pression ($A_2$) ne reçoit pas ladite pression signal ($P_{SLU}$) audit temps de passage.

5. Système de commande (20) pour transmission automatique (10) selon les revendications 3 et 4, dans lequel ledit dispositif générant une pression signal (SLU) inclut une soupape de changement (24) pour commuter l'alimentation et l'interruption de ladite pression signal ($P_{SLU}$) vers ladite troisième surface recevant de la pression ($A_2$), et

dans lequel ladite soupape de changement (24) interrompt l'arrivée de ladite pression signal ($P_{SLU}$) à ladite troisième surface recevant de la pression ($A_2$) audit temps de passage.

FIG. 1

FIG. 2

FIG. 3

|     | C-0 | C-1 | C-2 | B-0 | B-1 | B-2 | B-3 | B-4 | F-0 | F-1 | F-2 |
|-----|-----|-----|-----|-----|-----|-----|-----|-----|-----|-----|-----|
| N   |     |     |     | ○   |     |     |     |     |     |     |     |
| Rev |     |     | ○   | ○   |     |     |     | ○   |     |     |     |
| 1st | ○   | ○   |     |     |     |     |     | ●   | ○   |     | ○   |
| 2nd | ●   | ○   |     |     |     |     | ○   |     | ○   |     |     |
| 3rd | ○   | ○   |     |     | ●   | ○   |     |     | ○   | ○   |     |
| 4th | ○   | ○   | ○   |     |     | ◉   |     |     | ○   |     |     |
| 5th |     | ○   | ○   | ○   |     | ◉   |     |     |     |     |     |

# FIG. 4

Fuel Injection Rate

Ignition Timing

M

E

10

20

Hydraulic Control Unit

| SL1 | SL2 | SL3 | SL4 | SLU | SLT | SLN |

40

50

| Engine R. P. M. | N |
| Intake Air Flow Rate | Q |
| Intake Air Temp. | |
| Throttle Opening | |
| Running Speed | |
| Engine Water Temp. | |
| Brake SW | |
| Shift Position | |
| Pattern Select SW | |
| Overdrive SW | |
| CO Sensor | |
| C2 Sensor | |
| Transmission Oil Temp. | |
| Manual Shift SW | |

Engine Control Computer

O/N

Gear Stage

Automatic Shift Control Computer

30

# FIG. 5

```
                        ┌──────────┐
                        │  START   │
                        └──────────┘
                             │
                             ▼
                        ╱─────────╲        ,1
                       ╱ What Shift ?╲
                        ╲─────────╱
                             │
        ┌────────────┬───────┴────────┬──────────────┐
        ▼ 2         ▼ 7              ▼ 13           ▼ 18
┌──────────────┐ ┌──────────────┐ ┌──────────────┐ ┌──────────────┐
│ 1st → 2nd Shift│ │ 2nd → 1st Shift│ │ 2nd → 3rd Shift│ │ 3rd → 2nd Shift│
└──────────────┘ └──────────────┘ └──────────────┘ └──────────────┘
```

**2** 1st → 2nd Shift

**3** SL3 ON → OFF to Regulate B-3 Control Valve

**4** Change Shift Valve to 2nd Speed State

**5** 1st → 2nd Shift according to SLU Output Pattern of 1st →2nd Shift Control

**6** SL3 OFF → ON for 2nd Speed Steady State

**7** 2nd → 1st Shift

**8** Output 100 % of SLU to Prepare Drain Pressure Control of B-3

**9** SL3 ON → OFF to Regulate B-3 Control Valve

**10** 2nd → 1st Shift according to Output Pattern of 2nd → 1st Shift Output

**11** Change Shift Valve to 1st Speed State

**12** SL3 OFF → ON for 1st Steady Speed State

**13** 2nd → 3rd Shift

**14** Output SLU according to Input Torque

**15** SL3 ON → OFF to Regulate B-3 Control Valve

**16** Change Shift Valve to 3rd Speed State to Drain B-3 Pressure according to Accumulator Control of B-2 to Effect 2nd → 3rd Shift (for SLU Output Pattern at 2nd → 3rd Shift)

**17** At t₁ secs. after Detection of Start of Rotational Change of 2nd → 3rd Shift, SL3 OFF → ON for 3rd Speed Steady State

**18** 3rd → 2nd Shift

**19** SL3 ON → OFF to Regulate B-3 Control Valve

**20** Change shift Valve to 2nd Speed State to Drain B-2 Pressure to Start 3rd → 2nd Shift

**21** 3rd → 2nd Shift according to SLU Output Pattern of 3rd → 2nd Shift Control

**22** SL3 OFF → ON for 2nd Speed Steady State

```
                        ┌──────────┐
                        │   END    │
                        └──────────┘
```

# FIG. 6

EP 0 685 666 B1

# FIG. 7

# FIG. 8

# FIG. 9

# FIG. 10

FIG. 11

FIG. 12

## FIG. 13

## FIG. 14

FIG. 15

EP 0 685 666 B1

# FIG. 16

# FIG. 17

# FIG. 18

# FIG. 19